# EUROPEAN PATENT APPLICATION

(11) **EP 1 450 226 A2**
(43) Date of publication of application: **25.08.2004**
(21) Application number: 04250868.9
(22) Date of filing: 18.02.2004
(51) Int. Cl.: G05B 19/4155

(54) **Numerical controller**

(30) Priority: 21.02.2003 JP 2003044302
(71) Applicant: FANUC LTD, Minamitsuru-gun, Yamanashi 401-0597 (JP)
(72) Inventor: Nagashima, Noritake Room 8-303, Minamitsuru-gun Yamanashi 401-0511 (JP); Hasegawa, Satoshi Room 10-104, Minamitsuru-gun Yamanashi 401-0511 (JP)
(74) Representative: Billington, Lawrence Emlyn

(57) **Abstract**

A numerical controller making it easy to prepare and alter sequence programs. Grouping is made according to signal type and/or signal address. Address tables AT1-1, AT2-2 are provided in which top physical addresses for respective group numbers are stored for every sequence program. The program includes object codes, each constituted by an instruction code, a group number, and an offset address. When the object code is read in, a top physical address for the instruction group number is read out from a table corresponding to the program. The offset address is added to the top physical address to determine a physical address of a signal and perform processing for the instruction code. Since the address tables are provided for every program to have different physical addresses, it is enough to prepare only one program for a common portion of a plurality of programs, and enough to alter only the address tables even if hardware is subject to alteration.

## Description

### BACKGROUND OF THE INVENTION

### 1. Field of the Invention

The present invention relates to a numerical controller including a sequence control section for executing sequence programs.

### 2. Description of Related Art

In a sequence control section incorporated in a numerical controller, a sequence program is executed to control a numerical control section of the numerical controller to achieve an M function (auxiliary function with respect to machine motion) and a T function (tool specifying function), and to control peripheral equipment (a workpiece loader, an ATC (automatic tool exchanger), etc.) of a machine.

With recent trend of higher machine functionality, the sequence program becomes increasingly larger in capacity. In addition, control programs for additional peripheral equipment and for machine automation are often added to the sequence program. Thus, the sequence program is large scaled, making it difficult to perform maintenance and management thereof. To solve these problems, an attempt has been made to prepare a sequence program for control of a basic section of a machine and a sequence program for control of additional peripheral equipment separately from each other, and to concurrently execute these programs utilizing signal memory regions adapted for exclusive use by the programs, whereby maintainability of the sequence programs is enhanced. Signals stored in different memory region for use in the respective sequence programs makes it possible to prevent the alteration to one of the sequence programs from affecting another sequence program. This is quite advantageous in maintenance of the sequence programs.

The sequence program includes instructions for reading and writing a value from and into the signal memory, and includes instructions for logical operation, numerical operation, and so on. An object code for such instruction is constituted by an "instruction code" and "signal memory address information." Recorded as the "signal memory address information" are pieces of information one-to-one corresponding to physical addresses for signals in the signal memory of the sequence control section. Thus, in order to permit a single sequence control section to execute a plurality of sequence programs utilizing signal memory regions adapted for exclusive use by the programs, more specifically for instance, in order to execute a sequence program P1 using signals in a signal memory region M1 and execute a sequence program P2 using signals in a signal memory region M2, every object code in the sequence program P1 must include a "signal memory address information" recorded therein that one-to-one corresponds to the physical address for the associated signal in the signal memory region M1, and every object code in the sequence program P2 must include a "signal memory address information" one-to-one corresponding to the physical address for the associated signal in the signal memory region M2.

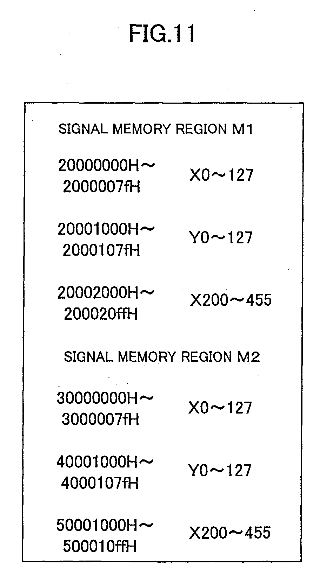

In some cases, the address allocation to the signals in the signal memory region M1 differs from that in the signal memory region M2. FIG. 11 shows an example of the address allocation to the signals in the signal memory regions M1 and M2. In the signal memory region M1, addresses "20000000H through 2000007fH" are allocated to input signals X0 through X127 from an I/O device, "20001000H through 2000107fH" are allocated to output signals Y0 through Y127 from the I/O device, and "20002000H through 200020ffH" are allocated to input signals X200 through X455 from the I/O device.

On the other hand, in the signal memory region M2, addresses "3000000H through 3000007fH" are allocated to input signals X0 through X127 from the I/O device, "40001000H through 4000107fH" are allocated to output signals Y0 through Y127 from the I/O device, and "50001000H through 500010ffH" are allocated to input signals X200 through X455 from the I/O device.

As mentioned above, the address allocation in the signal address range sometimes varies depending on signal type and signal address. Therefore, the object codes for the sequence programs P1 and P2 must be independently prepared to each have a different "signal memory address information" on the basis of the pieces of the physical address information for the signals in the signal memory regions M1 and M2.

When the physical addresses for the signals in the signal memory regions are to be changed after the hardware of the sequence control section is subject to alteration, for instance, new object codes must be prepared based on the changed physical address maps. This makes it impossible to maintain binary replaceability between the object codes before and after the change.

### SUMMARY OF THE INVENTION

The present invention provides a numerical controller capable of easily preparing and altering sequence programs.

According to one aspect of the invention, a sequence control section incorporated in a numerical controller comprises: switching means for successively switching a sequence program to be executed among a plurality of sequence programs, signals for executing instructions of the sequence program being grouped; a plurality of address tables respectively prepared for the sequence programs, each of the address tables storing top physical addresses for the grouped signals; selecting means for selecting one of the address tables for the sequence program to be executed; and determining means for determining a physical address to be accessed for the grouped signal based on information on group designation and an offset address from the top physical address, which is included in an object code associated with the instruction of the sequence program, and the address table selected by the selecting means in execution of the instruction.

According to another aspect of the present invention, a sequence control section incorporated in a numerical controller comprises: switching means for successively switching a sequence program to be executed among a plurality of sequence programs, signals for executing instructions of the sequence program being grouped according to signal type or signal address range; a plurality of address tables respectively prepared for the sequence programs, each of the address tables storing top physical addresses for the grouped signals; determining means for determining a top physical address for the grouped signal based on information on group designation, which is included in an object code associated with the instruction of the sequence program, and one of the plurality of address tables; calculation means for calculating a physical address for the grouped signal based on the determined top physical address and information on an offset address from the top physical address included in the object code; and execution means for executing the instruction by accessing the determined physical address for the grouped signal.

According to a further aspect of the present invention, a sequence control section incorporated in a numerical controller comprises: an address table storing physical addresses for signals symbolized with symbol information for executing instructions of a sequence program; and determining means for determining a physical address to be accessed for the symbolized signal based on symbol information included in an object code associated with the instruction of the sequence program, and the address table in execution of the instruction.

According to a still further aspect of the present invention, a sequence control section incorporated in a numerical controller comprises: switching means for successively switching a sequence program to be executed among a plurality of sequence programs, signals for executing instructions of the sequence program being symbolized with symbol information; a plurality of address tables respectively prepared for the sequence programs, each of the address tables storing physical addresses for the symbolized signals; selecting means for selecting one of the address tables for the sequence program to be executed; and determining means for determining a physical address to be accessed for the symbolized signal based on the symbol information included in an object code associated with the instruction of the sequence program and the address table selected by the selecting means in executing the instruction.

According to a still further aspect of the present invention, a sequence control section incorporated in a numerical controller comprises: switching means for successively switching a sequence program to be executed among a plurality of sequence programs, signals for executing instructions of the sequence program being grouped according to signal type or signal address range, or being symbolized with symbol information; address tables respectively prepared for the sequence programs, the address tables including first address tables storing top physical addresses for the grouped signals and second address tables storing physical addresses for symbolized signals; first determining means for determining a top physical address for the grouped signal based on information on group designation included in an object code associated with the instruction of the sequence program, and one of the first address tables; calculation means for calculating a physical address to be accessed for the grouped signal based on the determined top physical address and information on an offset address from the top physical address included in the object code; second determining means for determining a physical address to be accessed for the symbolized signal based on symbol information included in an object code assigned for instruction of the sequence program, and one of the second address tables; and execution means for executing the instruction by accessing the determined physical address.

The switching means may switch the sequence program to be executed each time when a set time period elapses, and the selecting means may select one of the address tables in accordance with a table-selection instruction included in the sequence program.

### BRIEF DESCRIPTION OF THE DRAWINGS

FIG. 1 is a block diagram showing an essential part of a numerical controller according to one embodiment of this invention;
FIGS. 2a and 2b are diagrams for explaining signal grouping in the embodiment;
FIGS. 3a and 3b are diagrams showing an example of address tables in the embodiment;
FIGS. 4a and 4b are diagrams for explaining an example of address tables for pieces of symbol information in the embodiment;
FIG. 5 is a view for explaining the principle of processing for determining physical addresses for signals on the basis of a group number in the embodiment;
FIG. 6 is a view for explaining the principle of processing for determining a physical address for a signal for executing an instruction with symbol information in the embodiment;
FIG. 7 is a flowchart of processing executed by a processor of a sequence control section according to a first embodiment;
FIG. 8 is a flowchart of processing executed by the processor of the sequence control section according to a second embodiment;
FIG. 9 is a flowchart of part of processing executed by the processor of the sequence control section according to a third embodiment;
FIG. 10 is a flowchart of the remaining part of processing executed by the processor of the sequence control section according to the third embodiment; and
FIG. 11 is a view for explaining physical address ranges allocated to signals.

### DETAILED DESCRIPTION

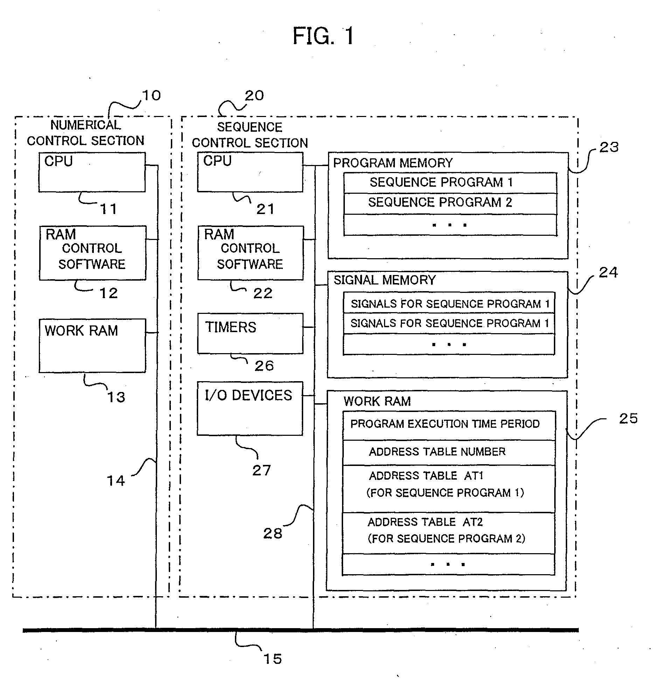

Referring to FIG. 1, a numerical controller according to one embodiment of this invention will be explained.

The numerical controller comprises a numerical control section 10 having a processor 11 to which are connected, through a bus 14, a RAM 12 storing a control software used to control the numerical control section 10, and a work RAM 13. Axis control means for controlling servomotors that drive machine axes to be controlled, etc. are also connected to the processor 11 although an illustration is omitted in FIG. 1.

A sequence control section 20 comprises a processor 21 to which are connected, through a bus 28, a RAM 22 storing a control software for controlling the sequence control section 20, a program memory 23 comprised of a RAM for storing various sequence programs, a signal memory (RAM) 24, a work RAM 25, various timers 26, input/output devices 27 connected to the machine and peripheral equipment. The bus 14 is connected to the bus 28 through a bus 15.

As mentioned above, sequence programs are stored in the program memory 23. For simplicity of explanation, it is assumed hereinafter that sequence programs 1 and 2 are stored in the memory.

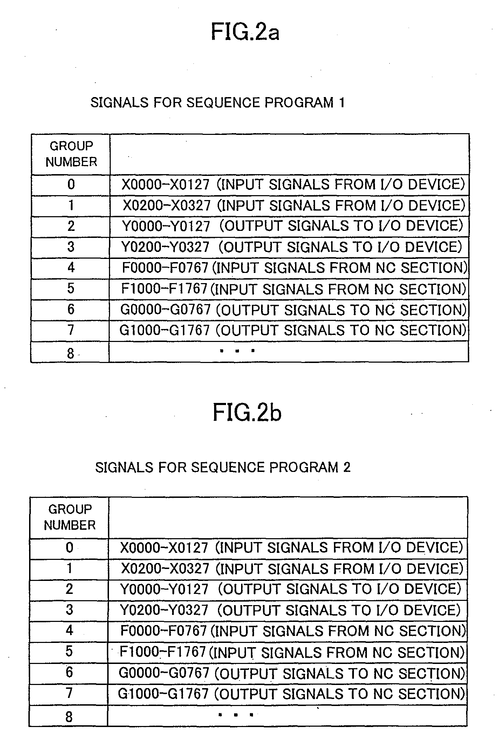

In the signal memory (RAM) 24, signals dealt in the sequence programs are stored in such a manner that they are divided program by program and/or divided into groups of signal address ranges. FIGS. 2a and 2b are diagrams for explaining the grouping of the signals. The signals are first divided into ones for the sequence program 1 and ones for the sequence program 2, then divided according to signal types X, Y, F, G, etc., and also divided into groups of signal address ranges. In the example shown in FIGS. 2a and 2b, the signals are divided in such a manner that signals X which are input signals from the I/O device and have addresses "0000" through "0127" belong to group number 0, signal X of address "0200" through "0327" belong to group number 1, and so on.

Similarly, output signals Y to the I/O device having addresses "0000" through "0127" belong to group number 2, output signals Y of addresses "Y0200" through "Y0327" belong to group number 3, input signals from the numerical control section 10 having addresses "F0000" through "F0767" belong to group number 4, input signals from the numerical control section 10 having addresses "F1000" through "F1767" belong to group number 5, output signals to the numerical control section 10 having addresses "G0000" through "G0767" belong to group number 6, output signals to the numerical controller 10 having addresses "G1000" through "G1767" belong to group number 7, and so on. In this manner, the signals are divided into groups according to signal type and signal address range.

As explained above, the address allocation in the signal memory region varies depending on signal type and on the address difference between signals of the same type (as in the case of signals X in FIG. 11). Thus, the grouping of the signals in the signal memory region is made in units of signals whose addresses are allocated together and whose physical addresses have a possibility of being changed together.

In the work RAM 25, an execution time period is set and stored during which the below-mentioned sequence programs are executed step by step. Also is stored an address table number that is used as mentioned later. Further are stored an address table AT1 for the sequence program 1 and an address table AT2 for the sequence program 2. The address tables AT1, AT2 respectively include tables AT1-1, AT2-1 associated with signal groups and tables AT1-2, AT2-2 associated with pieces of symbol information that are designated in object codes in the sequence programs.

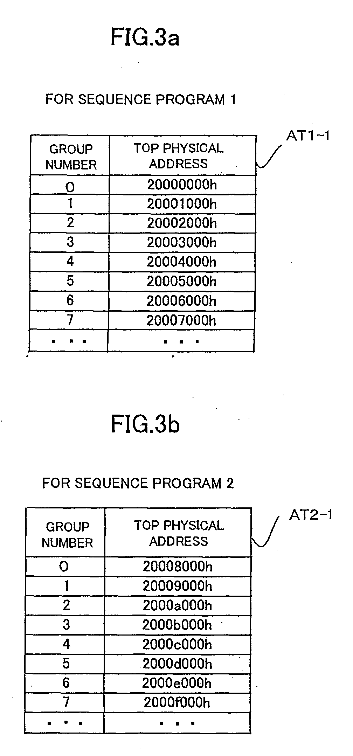

FIGS. 3a and 3b are diagrams showing an example of the address tables AT1-1, AT2-1 associated with the signal groups. In the address table AT1-1 for the sequence program 1, a top physical address "20000000h" is set for the group designated by group number 0, and top physical addresses for other group numbers are set so as to increase in units of "1000h" as shown in FIGS. 3a and 3b.

In the address table AT2-1 for the sequence program 2, a top physical address "20008000h" is set for group number 0, and top physical addresses for other group numbers are set so as to increase in units of "1000h" as shown in FIGS. 3 a and 3b. Thus, in the address tables AT1-1 and AT2-1 individually corresponding to the sequence programs 1 and 2, different top physical addresses are set for the same group number.

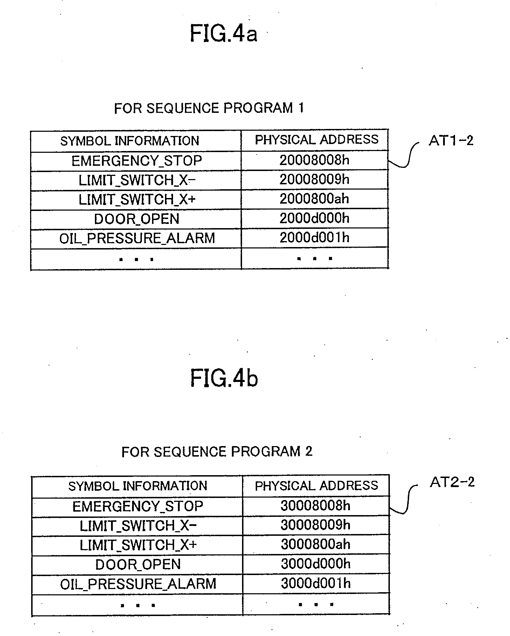

FIGS. 4a and 4b shows examples of the address tables AT1-2, AT2-2 associated with symbol information. As for "emergency stop information," a physical address "20008008h" is set in the address table AT1-2 for the sequence program 1, and a physical address "30008008h" is set in the address table AT2-2 for the sequence program 2. Similarly for other symbol information, different physical addresses are set for the same symbol information between the address tables AT1-2 and AT2-2 for the sequence programs 1 and 2.

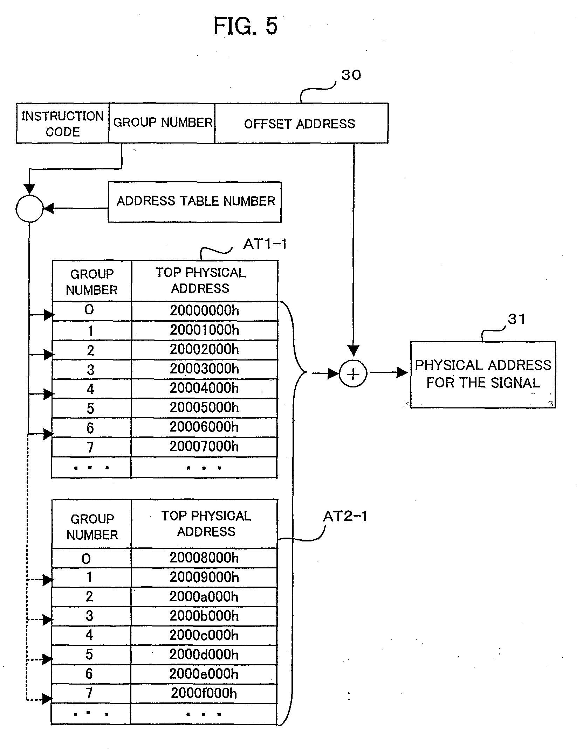

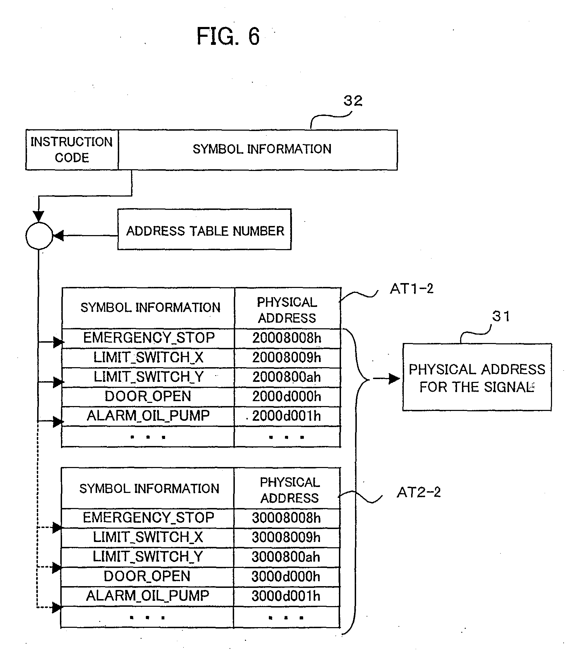

FIGS. 5 and 6 are views for explaining the principle of processing in this embodiment for determining physical addresses for signals. FIG. 5 explains a case of an instruction including a group number, and FIG. 6 explains a case of an instruction including symbol information. In the following, processing for an instruction including a group number shown in FIG. 5 will be first explained.

Reference numeral 30 denotes an object code format of an instruction including a group number in a sequence program, which is constituted by an instruction code, a group number, and an offset address indicating an offset address amount from the top physical address for the group concerned. The "group number" and the "offset address" correspond to the conventional "signal memory address information. " When an instruction of this format is read in, an address table is determined based on the group number and an address table number that is set in advance before execution of the sequence program concerned, and the top physical address corresponding to the group number set in the address table is read out. Then, the instructed offset address is added to the top physical address, to thereby determine the physical address 31 of the signal concerned, and processing (reading, writing, logical operation, numerical operation, etc.) instructed by the instruction code is executed.

Even if all of the instruction code, the group number and the offset address are the same, that is, even if the object code is the same between instructions, the top physical address for the group number varies depending on address table, and thus the physical address 31 of signal determined by adding the same offset address varies depending on address table. Since the actually designated physical address is differentiated by designating a different address table between sequence programs, pieces of peripheral equipment, etc. can be sequence controlled without the need of changing the sequence programs.

For instance, it is assumed here that an object code comprises the instruction code "X0000" indicative of reading operation, the group number "0", and the offset address "0." The first address of the signal X belonging to the group number "0" is "0000", which corresponds to the top physical address. Thus, the offset address is set at "0".

When the designated address table number is "1", the top physical address "20000000h" of the group number "0" is read out from the address table AT1-1. Then, the offset address "0" is added to this top physical address "20000000h", whereby the physical address "20000000h" is determined, and information in this address is read out.

When the designated address table number is "2" on the other hand, the top physical address "2008000h" of the group number "0" is read out from the address table AT2-1, and the offset address "0" is added thereto, whereby the physical address "20008000h" of signal is determined, and information in this address is read out. Thus, by changing the designation of address table number, processing is made to a different physical address, even if the instruction includes the same object code.

FIG. 6 is a view for explaining what operation is made in case the object code includes symbol information. Reference numeral 32 indicates a format of the object code including symbol information, which is comprised of an instruction code and symbol information. In other words, the "symbol information" is used instead of the "signal memory address information" in the conventional object code. When an instruction formed by such object code is read in, an address table is determined based on an address table number set in advance, and the physical address corresponding to the symbol information set in this address table is read. Then, by using the thus read physical address as the physical address 31 of the signal concerned, the processing (reading, writing, logical operation, or the like) for the instruction code is executed.

For instance, when the symbol information is "EMERGENCY STOP" indicating a writing instruction, and when the address table number 1 is set, the physical address "2008008h" is read from the address table AT1-2, and information of emergency stop is written into this physical address. When the address table number 2 is set, the physical address "30008008h" is read from the address table AT2-2, and emergency stop information is written into this physical address.

By changing the address table, even for the instruction comprised of the same object code, a different physical address can be designated for the execution of processing. Therefore, in the case of controlling two pieces of peripheral equipment, address tables each prepared to correspond to an associated one of sequence programs used for individual controls of these peripheral equipment make it possible to eliminate any confusion which would be caused when sequence controls are concurrently carried out, since processing is carried out utilizing differentiated physical addresses, even if instructions comprised of the same object code are included in both the sequence programs.

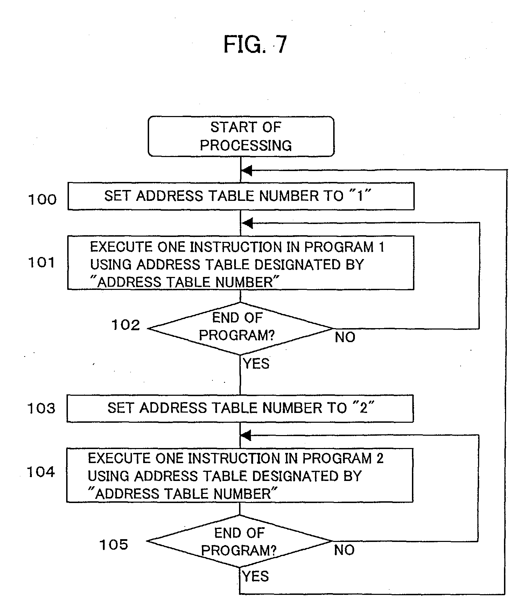

FIG. 7 is a flowchart of processing executed by the processor 21 of the sequence control section according to a first embodiment of this invention, wherein the sequence programs 1 and 2 are alternately executed.

Upon start of the processing, at first, the address table number is set to "1" (Step 100). Then, the address tables AT1-1, AT1-2 shown in FIGS. 3 and 4 corresponding to the thus set address table number "1" are selected, physical addresses are determined based on the tables AT1-1 and AT1-2, and various instructions in the sequence program 1 are sequentially executed to the end of the program (Steps 101 and 102).

After the sequence program 1 is executed to its end, the address table number is set to "2" (Step 103), the address tables AT2-1, AT2-2 shown in FIGS. 3 and 4 corresponding to the set address table number "2" are selected, physical addresses are determined based on the tables AT2-1 and AT2-2, and instructions in the sequence program 2 are executed in sequence to the end of the program (Steps 104 and 105). Upon completion of executing the program, the flow returns to Step 100 and the foregoing processing is carried out again. In the processing, the sequence programs 1 and 2 are alternately executed. During when the sequence programs 1, 2 are alternately executed, there is no error in controlling operations of pieces of equipment that are controlled according to the sequence programs because the respective programs use different signal memory regions (different physical addresses for signals).

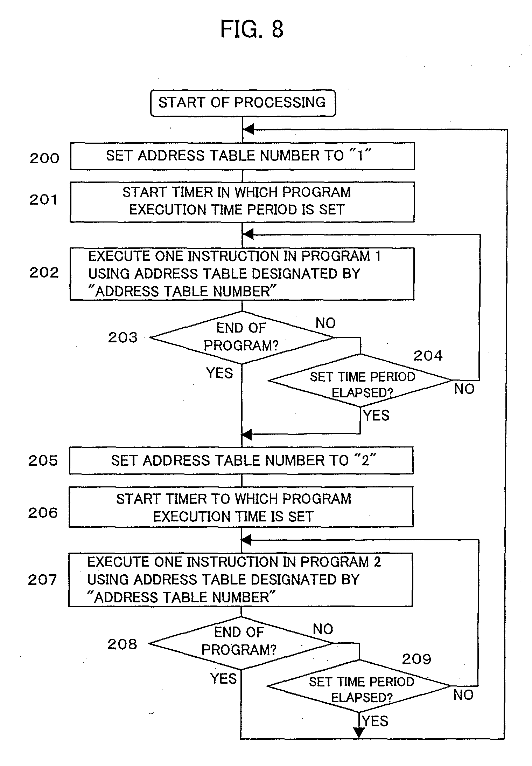

FIG. 8 is a flowchart of processing executed by the processor 21 of the sequence control section 20 according to a second embodiment of this invention. In the second embodiment, the sequence programs 1, 2 are alternately executed for a predetermined execution time period, so that each program is executed step by step.

At first, the address table number is set to "1" (Step 200), and a timer is started after the predetermined program execution time period is set in the timer (Step 201). Then, that one of instructions in the sequence program 1 which is specified by an execution pointer for the sequence program 1 is executed using the address tables AT1-1, AT1-2 shown in FIGS. 3 and 4 corresponding to the set address table number "1." Whereupon the execution pointer is incremented by "1" (Step 202). The just-mentioned execution pointer and an execution pointer for the sequence program 2 are first set to "0" in the initial setting upon electric power being turned on, and they are reset to "0" when the end of program is read in.

Then, whether or not an instruction indicating the end of program is read in is determined (Step 203). If not so, whether the set time period has elapsed is determined referring to the timer (Step 204). If the timer has not measured the set time period, the flow returns to Step 202 and the foregoing processing is executed.

When the timer measures the set time period, the address time table is set to "2" (Step 205), and the timer is started after the program execution time period is set in the timer (Step 206). Then, that one of instructions in the sequence program 2 which is specified by the execution pointer for the sequence program 2 is executed using the address tables AT2-1, AT2-2 shown in FIGS. 3, 4 and corresponding to the set address table number "2." Then, the execution pointer is incremented by "1" (Step 207), and whether or not the end of program is reached is determined (Step 208). If not so, whether or not the timer has measured the set time period is determined (Step 209). Subsequently, the processing of Steps 207-209 is repeatedly executed until the program comes to the end or the timer measures the set time period, whereby the instructions in the sequence program 2 are executed in sequence.

When the timer measured the set time period, the flow returns to Step 200, and the foregoing processing of Step 200 and subsequent Steps is executed. Thereafter, the sequence programs 1 and 2 are alternately executed step by step in units of the predetermined program execution time period.

In the second embodiment, there is no fear that erroneous control is made even if the sequence programs 1 and 2 are executed step by stem at intervals of the predetermined time period since the signal memory region (physical addresses for signals) is different between the sequence programs 1 and 2.

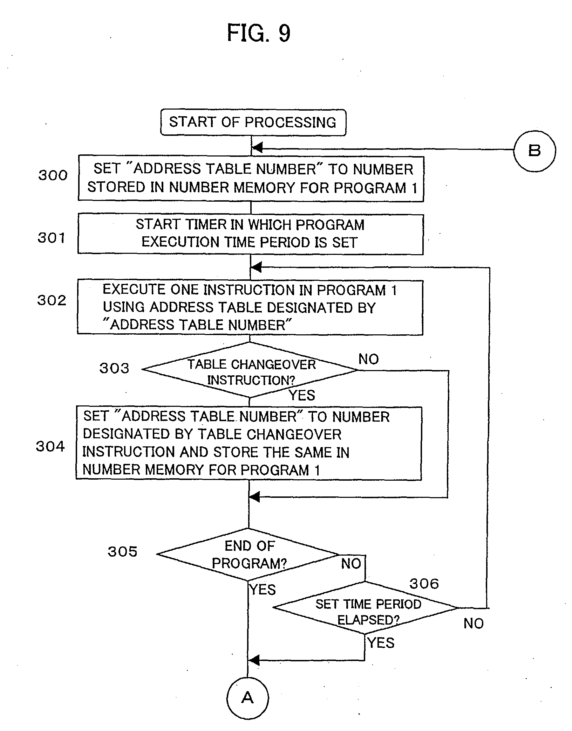

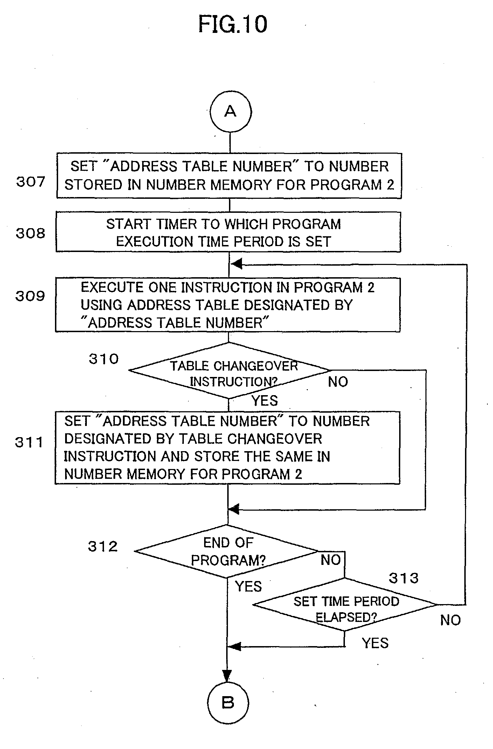

FIGS. 9-10 show a third embodiment of this invention, in which, unlike the second embodiment, a table changeover instruction is included in sequence programs, whereby table changeover to select a desired one of tables can be made, and by extension, information exchange between the sequence programs 1 and 2, and the like can be carried out.

At first, an address table number is set to a number that is set in a table-number storage memory for the program 1 (Step 300). Upon initial setting at the time of electric power being turned on, the table-number storage memory for the program 1 is stored with its own table number. In this manner, numbers "1" and "2" are set for the sequence programs 1 and 2, respectively.

Next, a timer is started after a predetermined program execution time period is set in the timer (Step 301). Then, that one of instructions in the sequence program 1 which is specified by an execution pointer for the sequence program 1 is executed using the address table shown in FIGS. 3 and 4 and corresponding to the set address table number (initially, "1"), and the execution pointer is incremented by "1" (Step 302). The execution pointer is initially set at "0" upon initial setting performed when electric power is turned on as mentioned above, and is incremented by "1" each time a program instruction is executed, and is reset to "0" when the end of program is read in.

Next, whether or not the readout instruction is a table changeover instruction is determined (Step 303). If not so, whether or not an instruction indicative of the end of program is read in is determined (Step 305). If the program comes to its end, whether or not the set time period has elapsed is determined referring to the timer (Step 306), and if the timer has not measured the set time period, the flow returns to Step 302 to execute the foregoing processing.

When the table changeover instruction is read in, the number designated by this table changeover instruction is set as the table number, and the thus designated number is stored in the table-number storage memory for the program 1 (Step 304). In this embodiment using two address tables, when the currently designated table number is "1," the table number is set to "2" in response to the table changeover instruction. Thus, the execution of instruction at Step 302 is made using the address table after changeover until the end of program is reached (Step 305) or the timer measures the set time period (Step 306).

When the timer measures the set time period, the number that is set in the table-number storage memory for the program 2 is set as the address table number (Step 307). In this embodiment, the address table number is set to "2." Subsequently, the timer is started after the program execution time period is set to the timer (Step 308). Next, using the address tables (AT2-1, AT2-2) corresponding to the set address table number ("2"), that one of instructions in the sequence program 2 which is specified by the execution pointer for the sequence program 2 is executed, and the execution pointer is incremented by "1" (Step 309). Then, whether or not the readout instruction is the table changeover instruction is determined (Step 310), and if not so, whether or not an instruction indicating the end of program is read in is further determined (Step 312). If the program does not come to the end, whether or not the set time period has elapsed is determined referring to the timer (Step 313). If the timer has not measured the set time period, the flow returns to Step 309 to execute the foregoing processing.

When the table changeover instruction is read in (Step 310), the number designated by this table changeover instruction is set as the table number, and the thus designated number is stored in the table-number memory for the program 2 (Step 311). Subsequently, the processing is made using the address table designated by the table number after change so long as the table changeover instruction is not read in from the sequence program 2.

When the timer measures the set time period, the flow returns to Step 300 and the processing of Step 300 and the subsequent Steps is executed. In this case, if the table changeover instruction is read in at Step 303, the number stored in the table number memory for the program 2 is changed and set as the table number, and the processing is made based on the address table designated by the thus changed number.

In the third embodiment, when program instructions are executed, using physical addresses that are proper to and different between the sequence programs 1 and 2, on the basis of the address tables AT1-1 and AT1-2 for the program 1 and the address tables AT2-1 and AT2-2 for the program 2, the sequence program 1 can access physical addresses for the program 1 for reading and writing operations, and the sequence program 2 can access physical addresses for the program 1 for reading and writing operations. As a result, the concurrently executed sequence programs 1, 2 each can monitor another program, and can perform queuing, etc.

In a case where the numerical control section 10 executes a multiple control for controlling a plurality of systems, a table changeover is made to select a desired one of address tables provided for every system, so that the same sequence program is executed for the systems. For instance, when the sequence program 1 is to be executed, address tables AT1-1a, AT1-1b, AT1-1c, AT1-2a, AT1-2b, AT1-2c, etc. are provided for respective systems a, b, c, etc. The address tables AT1-1a, AT1-2a are selected when the sequence program 1 is executed for the system a, and then a changeover instruction is supplied to make a changeover to the address tables AT1-1b, AT1-2b for executing the sequence program 1 for the system b. Subsequently, in order to execute the sequence program 1 for the system c, the changeover to the address tables AT1-1c and AT1-2c is made by the changeover instruction. Thus, it is possible to cause the plural systems to carry out the same operation by simply changing the address tables.

In order to change the physical addresses for respective signals in each signal memory region after alteration to the hardware of the sequence control section, for instance, it is enough to change address tables, and hence alternation and expansion of the system can be carried out with ease.

The present invention is advantageous in that an object code common to different sequence programs can be executed utilizing different signal memory regions between these programs. Therefore, no physical address information for each signal is required to be directly recorded in the object code. Since object codes do not depend on physical addresses for signals concerned, a portion common to different sequence programs may be formed by the same sequence program, and object codes in the sequence programs are not required to be prepared for respective hardware having different physical address maps in their signal memories, whereby man-hour required for program development can be reduced.

## Claims

1. A numerical controller with a sequence control section incorporated therein, the sequence control section comprising:
switching means for successively switching a sequence program to be executed among a plurality of sequence programs, signals for executing instructions of the sequence program being grouped;
a plurality of address tables respectively prepared for the sequence programs, each of said address tables storing top physical addresses for the grouped signals;
selecting means for selecting one of said address tables for the sequence program to be executed; and
determining means for determining a physical address to be accessed for the grouped signal based on information on group designation and an offset address from the top physical address, which is included in an object code associated with the instruction of the sequence program, and the address table selected by said selecting means in execution of the instruction.

2. A numerical controller with a sequence control section incorporated therein, the sequence control section comprising:
switching means for successively switching a sequence program to be executed among a plurality of sequence programs, signals for executing instructions of the sequence program being grouped according to signal type or signal address range;
a plurality of address tables respectively prepared for the sequence programs, each of said address tables storing top physical addresses for the grouped signals;
determining means for determining a top physical address for the grouped signal based on information on group designation, which is included in an object code associated with the instruction of the sequence program, and one of the plurality of address tables;
calculation means for calculating a physical address for the grouped signal based on the determined top physical address and information on an offset address from the top physical address included in the object code; and
execution means for executing the instruction by accessing the determined physical address for the grouped signal.

3. A numerical controller with a sequence control section incorporated therein, the sequence control section comprising:
an address table storing physical addresses for signals symbolized with symbol information for executing instructions of a sequence program; and
determining means for determining a physical address to be accessed for the symbolized signal based on symbol information included in an object code associated with the instruction of the sequence program, and said address table in execution of the instruction.

4. A numerical controller with a sequence control section incorporated therein, the sequence control section comprising:
switching means for successively switching a sequence program to be executed among a plurality of sequence programs, signals for executing instructions of the sequence program being symbolized with symbol information;
a plurality of address tables respectively prepared for the sequence programs, each of said address tables storing physical addresses for the symbolized signals;
selecting means for selecting one of said address tables for the sequence program to be executed; and
determining means for determining a physical address to be accessed for the symbolized signal based on the symbol information included in an object code associated with the instruction of the sequence program and the address table selected by the selecting means in executing the instruction.

5. A numerical controller with a sequence control section incorporated therein, the sequence control section comprising:
switching means for successively switching a sequence program to be executed among a plurality of sequence programs, signals for executing instructions of the sequence program being grouped according to signal type or signal address range, or being symbolized with symbol information;
address tables respectively prepared for the sequence programs, the address tables including first address tables storing top physical addresses for the grouped signals and second address tables storing physical addresses for symbolized signals;
first determining means for determining a top physical address for the grouped signal based on information on group designation included in an object code associated with the instruction of the sequence program, and one of the first address tables;
calculation means for calculating a physical address to be accessed for the grouped signal based on the determined top physical address and information on an offset address from the top physical address included in the object code;
second determining means for determining a physical address to be accessed for the symbolized signal based on symbol information included in an object code assigned for instruction of the sequence program, and one of the second address tables; and
execution means for executing the instruction by accessing the determined physical address.

6. A numerical controller according to claim 1, 2, 4 or 5, wherein said switching means switches the sequence program to be executed each time when a set time period elapses.

7. A numerical controller according to claim 1 or 4, wherein said selecting means selects one of the address tables in accordance with a table-selection instruction included in the sequence program.

8. A numerical controller according to claim 2 or 5, wherein said sequence control section further comprises selecting means for selecting one of the address tables in accordance with a table-selection instruction included in the sequence program.
